# EUROPÄISCHE PATENTSCHRIFT

(11) **EP 0 729 912 B1**
(45) Veröffentlichungstag und Bekanntmachung des Hinweises auf die Patenterteilung: **28.11.2001**
(21) Anmeldenummer: 96103101.0
(22) Anmeldetag: 01.03.1996
(51) Int. Cl.: B66D 3/22, F16D 67/06

(54) **Kettenzug mit einer durch die Bremse verstellbaren Kupplung**
Chain hoist with brake actuated clutch
Palan à chaîne muni d'un accouplement actionné par un frein

(30) Priorität: 02.03.1995 DE 19507191
(43) Veröffentlichungstag der Anmeldung: 04.09.1996
(73) Patentinhaber: R. Stahl Fördertechnik GmbH, 74653 Künzelsau (DE); KCI Konecranes International Plc, 05830 Hyvinkää (FI)
(72) Erfinder: Kuivamäki, Ismo, Fi-01300 Vantaa (FI)
(74) Vertreter: Patentanwälte Rüger, Barthelt & Abel

(56) Entgegenhaltungen:
- DE-A- 4 408 578
- DE-B- 1 045 742
- US-A- 2 947 393
- US-A- 3 016 118

## Beschreibung

In der DE-A-33 30 560 ist ein Elektrokettenzug beschrieben. Dieser Elektrokettenzug enthält in einem Gehäuse einen mit einem zylindrischen Anker versehenen Induktionsmotor, der über eine Rutschkupplung eine Getriebeeingangswelle antreibt. Die Ausgangswelle des Getriebes ist mit der Kettennuß des Elektrokettenzuges drehfest gekuppelt.

Auf der von der Getriebeeingangswelle abliegenden Seite des Ankers befindet sich eine Konusbremse, die durch Federmittel in die Bremsstellung vorgespannt ist. Zum Lüften der Bremse ist ein Tauchanker vorgesehen, der zu dem Motoranker koaxial ist und angezogen wird, wenn der Motor in Umdrehungen versetzt wird.

Aufgrund der Anordnung wirkt die Bremse durch die Rutschkupplung hindurch und kann folglich für die Kette kein größeres Bremsmoment erzeugen, als es die Rutschkupplung maximal zuläßt. Da für gewöhnlich die Haftreibung größer ist als die gleitende Reibung, kann es geschehen, daß das Hebezeug eine am Haken hängende Last nicht mehr festhalten kann, obwohl die Bremse eingerückt ist, weil die Kupplung durchrutscht. Eine solche Situation kann auftreten, wenn beim Anheben der Last die Kupplung zunächst im Bereich der Haftreibung betrieben wird, dann aber durch eine Störung, beispielsweise ein momentanes Verhaken der Last an einem Gegenstand oder durch Longitudinalschwingungen in der Kette, die Drehmomentgrenze der Rutschkupplung überschritten wird, die daraufhin in die Gleitreibung übergeht. Selbst wenn jetzt der Anker gestoppt wird und die Haltebremse zugespannt wird, senkt sich die Last weiter ab, denn die Rutschkupplung kann aus dem Zustand der gleitenden Reibung möglicherweise nicht mehr in den Zustand der Haftreibung zurückkehren.

Es ist deswegen zweckmäßig, die Bremse in jenen Teil des Antriebsstranges des Hebezeugs zu legen, der, vom Motor aus gesehen, hinter der Rutschkupplung liegt.

Eine solche Lösung ist beispielsweise aus der nicht vorveröffentlichten DE-A-44 08 578 bekannt. Das Bremsmoment kann unabhängig von dem Rutschmoment der Rutschkupplung eingestellt werden, und das Hebezeug ist dadurch in der Lage, Lasten sicher zu halten, selbst wenn bei Grenzlastbedingungen die Rutschkupplung ins Rutschen gekommen ist.

Bei dieser Lösung muß allerdings die zeitliche Relation zwischen dem Anlaufen des Motors und dem Lüften der Bremse sehr exakt eingehalten werden. Würde beispielsweise die Bremse beim Anheben einer Last schneller geöffnet werden als der Motor anlaufen kann, würde sich zunächst die Last absenken, ehe sie vom Motor gehoben wird. Falls umgekehrt erst der Motor anläuft und dann die Bremse gelüftet wird, bringt die angezogene Bremse die Rutschkupplung zum Durchrutschen und es kann mit dem Hebezeug nur noch eine kleinere Last entsprechend dem Reibkoeffizient bei der gleitenden Reibung angehoben werden.

Die Lösung nach der DE-A-37 10 332 vermeidet dieses Problem, indem ein Verschiebeankermotor verwendet wird, der die Synchronität zwischen Motor und Bremse zwangsläufig sicherstellt. Allerdings sind solche Verschiebeankermotoren mit konischem Anker sehr aufwendig in der Herstellung.

Ausgehend hiervon ist es Aufgabe der Erfindung, ein Hebezeug zu schaffen, bei dem das Bremsmoment von dem eingestellten Rutschmoment der Rutschkupplung unabhängig ist und bei dem nicht die Gefahr besteht, daß die Bremse die Rutschkupplung zum Gleiten bringt.

Diese Aufgabe wird erfindungsgemäß durch das Hebezeug mit den Merkmalen des Anspruches 1 gelöst.

Die Bremse wirkt bei dem neuen Hebezeug auf jenen Teil des Antriebsstrangs, der aus der Sicht des Motors hinter der Rutschkupplung liegt. Durch entsprechende konstruktive Gestaltung ist dafür gesorgt, daß die Vorrichtung, die die Bremsvorspannung erzeugt, gleichzeitig auch auf die Rutschkupplung einwirkt. Bei nicht gelüfteter Bremse wird durch diese Maßnahme das maximale Rutschmoment der Rutschkuplung erhöht. Bei entsprechender Dimensionierung kann sichergestellt werden, daß die Rutschkupplung bei nicht gelüfteter Bremse und eingeschaltetem Motorstrom im Zustand der Haftreibung bleibt und das Anlaufen des Motors blockiert. Wenn, ausgehend von diesem Zustand, die Bremse gelüftet wird, läuft das Hebezeug mit einer Rutschkupplung an, die sich nach wie vor im Zustand der Haftreibung befindet. Also in einem Zustand, in dem sie das größere Drehmoment übertragen kann.

Die zeitliche Steuerung des Einschaltens des Motorstroms und des Lüftens der Bremse ist folglich relativ unkritisch. Es braucht nur die Bedingung eingehalten zu werden, die Bremse erst zu lüften, nachdem der Motorstrom eingeschaltet wurde. Die Ansprechzeiten der Bremse brauchen bei der neuen Lösung nicht mehr berücksichtigt zu werden. Gerade diese Zeit unterliegt beträchtlichen Exemplarstreuungen und hängt wesentlich davon ab, mit welcher Überspannung bei einer magnetisch betätigten Bremse der Bremsmagnet erregt wird. So schwanken bei sonst konstanten Bedingungen die Ansprechzeiten der Bremse mit der momentanen Netzspannung, was bei den bekannten Lösungen dazu führen kann, daß, je nachdem, wie hoch die Netzspannung ist, das Hebezeug gelegentlich mit durchrutschender Kupplung anlaufen würde, während bei der neuen Lösung das Anlaufen mit nicht durchrutschender Kupplung immer sichergestellt werden kann.

Konstruktiv sehr einfach werden die Verhältnisse, wenn die Rutschkupplung aus der Sicht der Bremse als zweiteilige Bremsscheibe ausgebildet ist, so daß sich die Anpreßkraft der Kupplungsscheiben automatisch erhöht, wenn die Bremse zugespannt ist. Eine solche Anordnung läßt sich erreichen, wenn das wenigstens eine ausgangsseitige Kupplungsglied gleichzeitig das wenigstens eine drehbare Bremsglied ist oder mit diesem drehfest gekuppelt ist.

Sehr genau reproduzierbare Verhältnisse lassen sich erreichen, wenn die Bremsflächen Planflächen sind.

Ein vorzeitiger Verschleiß der Reibflächen einerseits und eine komplizierte Montage andererseits lassen sich vermeiden, wenn entweder die Kupplungseinrichtung oder die Bremseinrichtung axial schwimmend, aber im übrigen kippfrei gelagert sind. Beim Zuspannen der Bremse kann sich bei einer schwimmenden Lagerung der Kupplungseinrichtung diese axial entsprechend zwischen den Bremsflächen zentrieren, oder umgekehrt, bei einer axial festgelegten Kupplungseinrichtung kann sich die gesamte Bremseinrichtung entsprechend axial verschieben. Bei geöffneter Bremse wird durch die kippfreie schwimmende Lagerung ein Streifen einzelner Teile der Reibflächen vermieden.

Im übrigen sind Weiterbildungen der Erfindung Gegenstand von Unteransprüchen.

In der Zeichnung sind Ausführungsbeispiele des Gegenstandes der Erfindung dargestellt. Es zeigen:
Fig. 1 einen Kettenzug in einer perspektivischen Darstellung,
Fig. 2 den Kettenzug nach Fig. 1 in einem partiellen Längsschnitt und
Fig. 3 eine Stirnansicht auf die Kupplungs- und Bremseinheit.

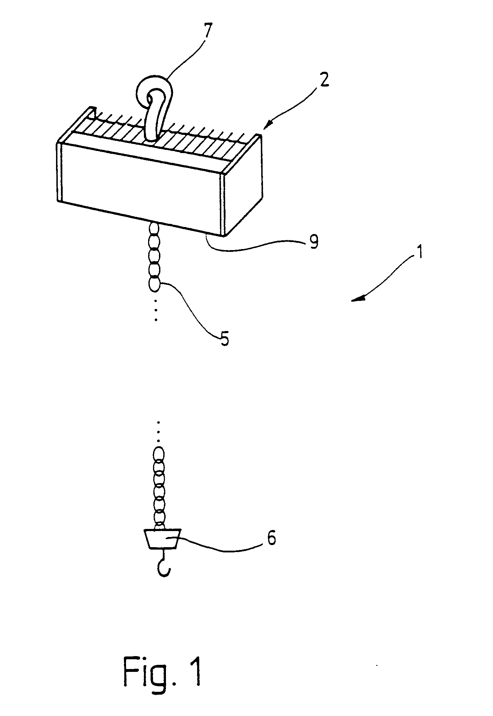

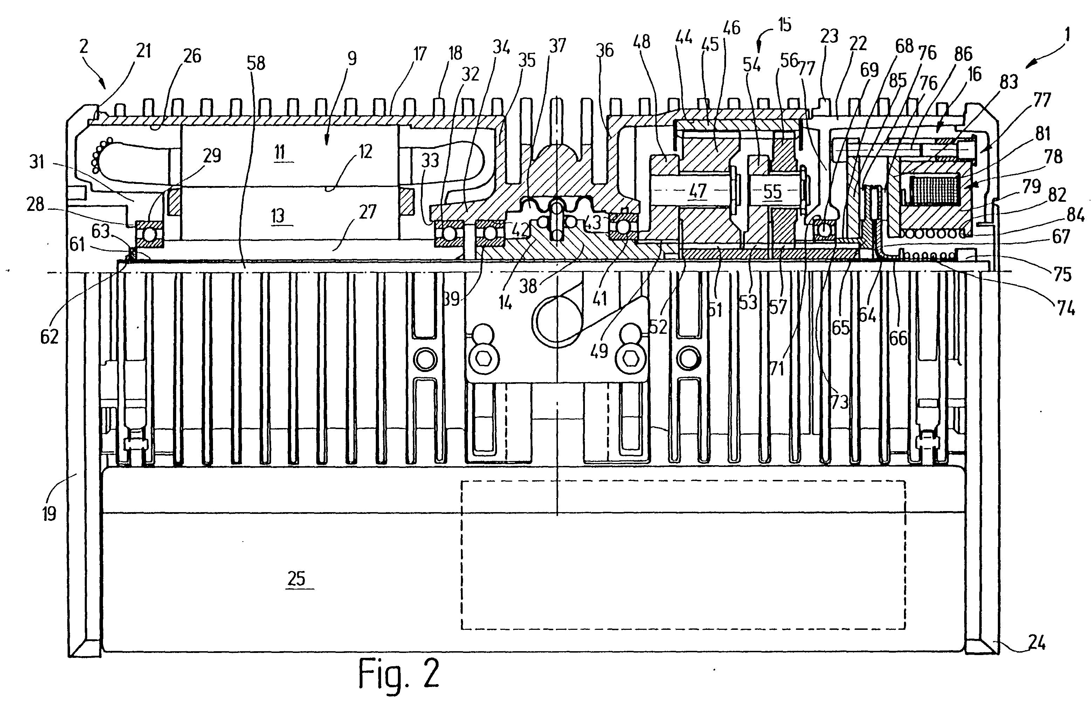

Fig. 1 zeigt stark schematisiert einen Kettenzug 1 mit einem Gehäuse 2, in dem ein Triebwerk (Fig. 2) angeordnet ist. An einer Unterseite tritt eine Rundgliederkette 5 aus, an deren unterem Ende ein Hakengeschirr 6 angebracht ist. Die Befestigung des Kettenzuges 1 geschieht mittels eines Hakens 7 an einer nicht gezeigten ortsfesten Struktur.

Wie der Schnitt nach Fig. 2 erkennen läßt, umfaßt das Triebwerk einen Asynchronmotor 9 mit einer Feldwicklung 11, in deren zylindrischer Bohrung 12 ein zylindrischer Käfigläufer 13 läuft. Ferner gehört zu dem Triebwerk eine lediglich im Schnitt erkennbare Kettennuß 14, auf deren von dem Motor 9 abliegenden Seite ein zweistufiges Planetengetriebe 15 angeordnet ist. Neben dem zweistufigen Planetengetriebe 15 befindet sich eine kombinierte Kupplungs- und Bremseinrichtung 16, die im Antriebsstrang zwischen dem Motor 9 und der Kettennuß 14 liegt. Durch die Kupplungseinrichtung wird der Antriebsstrang in zwei Abschnitte aufgeteilt.

Das Gehäuse 2 des Kettenzugs 1 besteht aus einem Gehäusemittelstück 17, das auf seiner Außenumfangsfläche in Umfangsrichtung verlaufende Rippen 18 trägt, die dem Gehäuse 2, in Querrichtung gesehen, eine etwa rechteckige Kontur verleihen. Wegen der Rippen 18 hat es eine über die Länge durchlaufende konstante Außengestalt, während tatsächlich jedoch der eigentliche Körper des Gehäuses im wesentlichen rohrförmig ist.

Das linke Stirnende des Mittelstücks 17 ist mittels eines Deckels 19 verschlossen, der über komplementäre Zentrierschultern 21 lagerichtig auf dem Mittelstück 17 gehalten ist. An dem rechten Stirnende schließt sich an das Mittelstück 17 ein dieselbe Außenumrißgestalt aufweisendes Bremsgehäuse 22 an, in dem die Bremseinrichtung 16 untergebracht ist. Auch das Bremsgehäuse 22 ist mit entsprechenden Kühlrippen 23 versehen, die in Umfangsrichtung liegen.

Das von dem Mittelstück 17 abliegende Ende des Bremsgehäuses 22 ist mit einem weiteren Stirndeckel 24 verschlossen, der im wesentlichen zu dem Stirndeckel 19 spiegelbildlich ist.

Beide Stirndeckel 19 und 24 stehen zur gleichen Seite über das Gehäuse 2 seitlich über, wodurch sich eine etwa C-förmige seitliche Öffnung bildet. In dieser seitlichen Öffnung ist ein Steuergehäuse 25 untergebracht, das nicht veranschaulichte Anschlußklemmen, Schaltschütze, elektronische Steuerungen und dergl. enthält. Die seitlichen überstehenden Deckel 19, 24 schützen das Steuergehäuse 25, das üblicherweise aus einem Kunststoff besteht, und balancieren den Kettenzug 1 bezüglich seiner Längsachse. Falls das Gewicht der Deckel 19, 24 nicht ausreicht, können zusätzliche Gewichte in den Deckeln 19, 24 angebracht werden.

Ausgehend von dem Stirndeckel 19 führt in das Mittelstück 17 eine kreisförmige Bohrung 26 hinein, in der das Blechpaket des Stators 11 reibschlüssig festsitzend eingeschrumpft ist. Der Anker 13 sitzt drehfest auf einer Hohlwelle 27, die am linken Ende mit Hilfe eines Rillenkugellagers 28 gelagert ist, das in einer zylindrischen und zu der Bohrung 26 koaxialen Lagerbohrung 29 sitzt. Diese Bohrung 29 befindet sich in einem nach innen weisenden rohrförmigen Fortsatz 31 des Stirndeckels 19. Zur Lagerung des anderen Endes der Hohlwelle 27 ist ein Rillenkugellager 32 vorhanden, das mit Haftsitz in einer Lagerbohrung 33 steckt. Die Lagerbohrung 33 befindet sich in einem in die Bohrung 26 ragenden rohrförmigen Fortsatz 34, der aus einer in dem Mittelstück 17 eingeformten Trennwand 35 vorsteht.

Im Abstand zu der Trennwand 35 enthält das Mittelstück 17 eine weitere Trennwand 36, wodurch zwischen den beiden Trennwänden 35 und 36 ein Kettennußgehäuse 37 abgeteilt ist. Die darin laufende Kettennuß 14 ist einstückig mit einer Hohlwelle 38 ausgebildet, die beidseits der Kettennuß 14 in zwei Rillenkugellagern 39 und 41 drehbar gelagert ist. Die beiden Rillenkugellager 39 und 41 stecken in zugehörigen Lagerbohrungen 42 und 43. Die Lagerbohrung 42 ist koaxial zu der Lagerbohrung 33 in dem rohrförmigen Fortsatz 34 untergebracht, während die Lagerbohrung 43 in einer entsprechenden Verdickung der Trennwand 36 untergebracht ist. Der Durchmesser der Lagerbohrung 43 ist so gewählt, daß, bezogen auf Fig. 2 von rechts her sowohl das Rillenkugellager 39 als auch die Kettennuß 14 eingeführt werden können, da der Durchmesser der Lagerbohrung 43 größer ist als der maximale Durchmesser der Kettennuß 14.

Rechts von der Trennwand 36 erweitert sich der Innenraum des Gehäuses 2 und es befindet sich dort eine zu den Lagerbohrungen 42 und 43 koaxiale Bohrung 44, in die ein Hohlrad 45 eingeschrumpft ist, das für beide Stufen des zweistufigen Planetengetriebes 15 gemeinsam ist. Die der Kettennuß 14 benachbarte Stufe umfaßt drei Planetenräder 46, die auf Achsen 47 eines zugehörigen Planetenträgers 48 drehbar gelagert sind und mit dem Hohlrad 45 kämmen. Der Planetenträger 48 ist mit Hilfe einer Profilverzahnung 49 drehfest mit einem nach rechts über das Rillenkugellager 41 überstehenden Stummel der Hohlwelle 38 verbunden.

Mit Hilfe der drei Planetenräder 46 der zweiten Stufe ist deren Sonnenrad 51 schwimmend gelagert. Die Länge des Sonnenrades 51 ist größer als die Breite der Planetenräder 46, so daß es nach rechts über die Planetenräder 46 vorragt, wenn es links über eine Zwischenscheibe 52 an der benachbarten Stirnseite der Welle 38 anläuft. Der überstehende Teil des Sonnenrades 51 steckt in einer komplementär verzahnten Bohrung 53 eines Planetenträgers 54 der ersten Stufe des zweistufigen Planetengetriebes 15. Auf dessen Achsen 55 sitzen wiederum insgesamt drei Planetenräder 56, die ein zugehöriges Sonnenrad 57 schwimmend lagern, das ebenfalls nach rechts übersteht und in das Bremsgehäuse 22 ragt.

Die getriebliche Verbindung zwischen dem Motor 9 und dem Planetengetriebe 15 geschieht mit Hilfe einer Steck- oder Zwischenwelle 58, die an ihrer Außenseite durchgehend mit einer Profilverzahnung versehen ist. In dem linken Ende der Hohlwelle 27 des Ankers 13 befindet sich ein profilverzahnter Abschnitt 61, der zu der Profilverzahnung der Steckwelle 58 komplementär ist. Von hier aus führt die Steckwelle 58 durch die Hohlwelle 27, durch die Hohlwelle 38 der Kettennuß 14, von dort durch das hohle Sonnenrad 51 und durch das Sonnenrad 57 bis in die Kupplungs- und Bremseinheit 16. An ihrem linken motorseitigen Ende ist die Steckwelle 58 durch einen in einer entsprechenden Nut sitzenden Sprengring 62, der sich über eine Beilagscheibe 63 der Stirnseite der Hohlwelle 27 abstützt, in Richtung nach rechts axial gesichert. Im übrigen ist die Steckwelle 58 gegenüber dem Sonnenrad 51 dem Sonnenrad 57 und der Kettennußwelle 38 frei drehbar.

Die kombinierte Kupplungs- und Bremseinheit 16 weist zwei zueinander parallele, plane und ringförmige Kupplungsscheiben 64 und 65 auf, die reibschlüssig miteinander in Eingriff stehen, wozu sie, wie dargestellt, entsprechende Reibbeläge tragen. Aus wärmetechnischen Gründen ist es zweckmäßig, diejenige der beiden Bremsscheiben 64 oder 65, die keinen Reibbelag trägt, verhältnismäßig stark auszubilden, um ihr eine große Wärmekapazität zu geben, damit die Kupplung die vorgeschrieben lange Zeit schleifen kann, ohne daß der Reibbelag beschädigt wird. An Stelle der gezeigten planen Gestalt der Kupplungscheiben 64 und 65 können sie auch konusförmige Reibflächen tragen.

Die Kupplungsscheibe 64 ist die angetriebene Scheibe, weshalb sie mit einer Nabe 66 versehen ist, die mit Hilfe einer zu der Profilverzahnung der Steckwelle 58 komplementären Profilverzahnung auf der Steckwelle axial verschieblich, jedoch mit der Steckwelle 58 drehfest gekuppelt ist. Die andere Kupplungsscheibe, die Kupplungsscheibe 65, ist die ausgangsseitige oder abtriebsseitige Kupplungsscheibe, die gegenüber der Steckwelle 58 lose drehbar ist, wozu auf dem Profil der Steckwelle 58 ein Lagerring 67 vorgesehen ist. Auch die Kupplungsscheibe 65 ist mit einer Nabe 68 versehen, die eine Innenverzahnung entsprechend der Außenverzahnung des Sonnenrades 57 trägt. Das Sonnenrad 57 ist, wie dargestellt, in Richtung auf die Kupplungs- und Bremseinheit 16 verlängert und steckt mit diesem verlängerten Abschnitt in der Nabe 68 der Kupplungsscheibe 65. Auf diese Weise wird eine axial verschiebliche, jedoch drehfeste Verbindung zwischen der Kupplungsscheibe 65 und dem Sonnenrad 57 hergestellt.

Die Lagerung erfolgt mit Hilfe eines Kugellagers 69, das in einer Bohrung 71 einer Trennwand 72 des Bremsgehäuses 22 sitzt. In diesem Rillenkugellager 69 ist die Nabe 68 drehbar gelagert. Die Lagerbohrung 71 für das Kugellager 69 ist mit einer Anlageschulter versehen und auch die Nabe 68 trägt eine Anlageschulter 73, so daß eine von rechts nach links auf die Kupplungsscheibe 65 wirkende Axialkraft über diese Schultern in das Gehäuse 2 eingeleitet werden kann.

Um die Vorspannung zu erzeugen, mit der die beiden Kupplungsscheiben 64 und 65 in Reibeingriff vorgespannt sind, sitzt auf einem nach rechts über die Kupplungsscheibe 64 vorstehenden Abschnitt der Steckwelle 58 eine als Druckfeder wirkende Schraubenfeder 74, die mittels einer auf ein entsprechendes Gewinde der Steckwelle 58 aufgedrehte Mutter 75 vorzuspannen ist. Gegebenenfalls liegen zwischen der Mutter 75 und der Feder 74 einerseits bzw. zwischen der Feder 74 und der Nabe 66 der Kupplungsscheibe 64 andererseits Beilagscheiben, die in der Zeichnung veranschaulicht sind, jedoch kein Bezugszeichen tragen.

Die beiden Kupplungsscheiben 64 und 65 sind gleichzeitig Bremsscheiben, weshalb sie auf ihren nach außen weisenden, d.h. voneinander weg zeigenden Flächen mit Bremsbelägen 76 versehen sind, deren Durchmesser mit den Durchmessern der Kupplungsbeläge der Kupplungsscheiben 64 oder 65 übereinstimmt. Diese Bremsbeläge 76 wirken mit einer stationären Bremseinrichtung 77 zusammen. Diese stationäre Bremseinrichtung 77 umfaßt einen in dem Bremsgehäuse 22 axial verschieblichen Elektromagneten 78 mit einem topfförmigen Eisenjoch 79 und einer darin befindlichen Magnetwicklung 81. Das Eisenjoch 79 ist in dem Bremsgehäuse 22 drehgesichert mit Hilfe von in dem Gehäuse enthaltenen Führungsnuten, in denen entsprechende Fortsätze des Eisenjochs 79 gleitend aufgenommen sind.

Das Eisenjoch 79 ist so angeordnet, daß seine offene Seite in Richtung auf die beiden Kupplungsscheiben 64 und 65 zeigt. Außerdem enthält das Eisenjoch 79 eine Durchgangsbohrung 82, durch die die Einsteckwelle 58 hindurchragt.

Vor der Öffnung des Eisenjoches 79 ist eine ringförmige Bremsplatte 83 angeordnet, die mit Hilfe einer Druckfeder 84 in Richtung auf die Kupplungsscheibe 64 zu vorgespannt ist. Diese Feder 84 in Form einer schraubenförmigen Druckfeder stützt sich an einer gegenüberliegenden rückwärtigen Schulter der Bohrung 82 ab. Eine weitere ringförmige Bremsplatte 85 befindet sich zwischen der Kupplungsscheibe 65 und der Trennwand 72. Diese Bremsscheibe ist mit Hilfe mehrerer Schrauben 86 drehgesichert, jedoch axial verschieblich mit dem Joch 79 verbunden. Das Joch 79 enthält zu diesem Zweck Gewindebuchsen, in die die Schrauben 86 eingedreht sind.

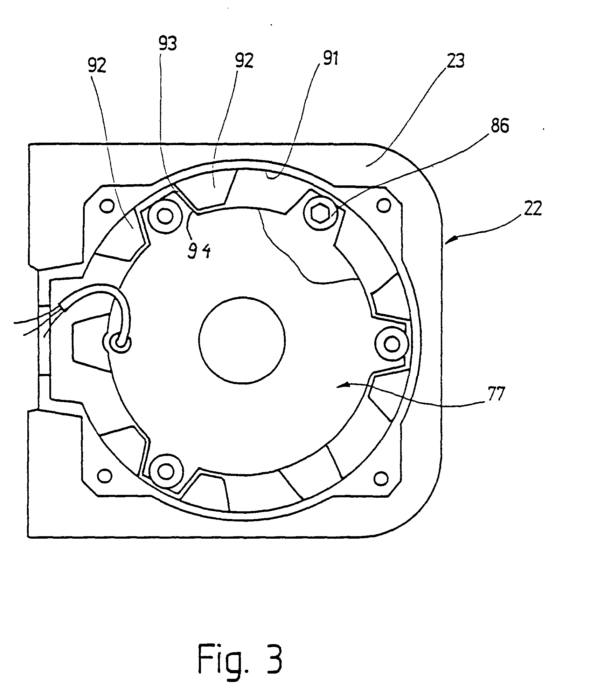

Fig. 3 zeigt schließlich eine Stirnansicht auf die Rückseite des Bremseinheit 77. Wie dort zu erkennen ist trägt das Bremsgehäuse 22 auf seiner Innenseite 91 eine Vielzahl von parallel zu der Achse der Steckwelle 58 verlaufenden Rippen 92, die jeweils paarweise Nuten 93 begrenzen. In diesen Nuten 93 befinden sich längsverschieblich Fortsätze 94, die an dem Magnetjoch 79, der Bremsplatte 83 und der Bremsplatte 85 vorgesehen sind. Durch Zusammenwirken dieser Fortsätze 94 mit den Nuten 93 ist die Bremseinheit 77 in dem Bremsgehäuse 22 drehgesichert und kann bei gelüfteter Bemse auch nicht in einem solchen Maße kippen, als daß ein ungleichmäßiger Verschleiß im unteren Bereich der Bremsplatten 83 und 85 zustandekommen könnte.

Die Montage des insoweit beschriebenen Kettenzugs 1 geschieht wie folgt:

An dem Gußrohling werden zunächst die Bohrungen 26, 44 sowie die Lagerbohrungen 33, 42 und 43 koaxial zueinander fertig bearbeitet, einschließlich der Schulter 21, auf der später der Lagerdeckel 19 sitzt. Sodann werden der Stator 11 und das Hohlrad 45 in die zugehörigen Bohrungen 26 bzw. 44 des Mittelstücks 17 eingeschrumpft.

Nachdem dies geschehen ist, werden das Lager 32 und sodann der Anker 13 mit seiner Hohlwelle 27 eingesetzt. Daraufhin wird der Lagerdeckel 19 mit dem darin sitzenden Lager 29 auf dem Gehäusemittelstück 17 befestigt.

Als nächstes erfolgt das Einsetzen der Kettennuß 14, die, wie oben erwähnt, mit ihrer zugehörigen Welle 38 einstückig ist, und der Lager 39 und 41. Anschließend wird das Planetengetriebe 15 eingebaut und das Bremsgehäuse 22 aufgesetzt. Sodann kann die vorbereitete Bremseinheit 16 in dem Bremsgehäuse 22 befestigt werden.

Parallel zu der vorstehend beschriebenen Montage erfolgt der Zusammenbau der kombinierten Kupplungs- und Bremseinheit 16. Dies geschieht, indem nach dem Einsetzen der Druckfeder 84 auf das Magnetjoch 79 die Bremsplatte 83, die Kupplungsscheibe 64, die Kupplungsscheibe 65 und schließlich die Bremsplatte 85 mit der dargestellten Orientierung aufgelegt werden. Sodann werden werden die Schrauben 86 in das Magnetjoch 79 eingedreht. Das Eindrehen der Schrauben 86 geschieht solange, bis zwischen der betreffenden Stirnseite des Magnetjochs 79 und der unmittelbar benachbarten Bremsplatte 83 der gewünschte Luftspalt erreicht ist, der später bei gelüfteter Bremse den Lüftespalt definiert. Die so vorbereitete Kupplungs- und Bremseinheit 16 wird mit der Nabe 68 voraus in das Kugellager 69 eingesteckt, wobei gleichzeitig das Sonnenrad 57 mit seinem vorstehenden Abschnitt in die Nabe 68 eindringt.

Als letztes wird die Steckwelle 58 von der Motorseite her eingeführt, bis sie die in der Fig. 2 gezeigte Lage einnimmt. Auf den in der Bohrung 82 des Magnetjochs 79 befindlichen Abschnitt wird die Druckfeder 74 aufgesteckt und mit Hilfe der aufgeschraubten Mutter 75 entsprechend vorgespannt.

Als letztes kann der Stirndeckel 24 aufgesetzt werden, womit der mechanische Zusammenbau insoweit erledigt ist.

Die Funktionsweise des beschriebenen Kettenzugs, insbesondere der kombinierten Brems- und Kupplungseinheit 16, ist wie folgt:

Der Kraftfluß, der zum Vorspannen der beiden Kupplungsscheiben 64 und 65 in Reibeingriff miteinander dient, geht, ausgehend von der Druckfeder 74 zu der Mutter 75, die die Kraft in die Steckwelle 58 einleitet. Die Steckwelle 58 stützt sich über den Sprengring 72 an der Hohlwelle 27 des Motors 9 ab. Die so auf die Hohlwelle 27 wirkende Axialkraft wird über das Rillenkugellager 32 in das Gehäusemittelstück 17 eingeleitet, das die Kraft auf die Trennwand 72 des Bremsgehäuses 22 überträgt. An der Trennwand 72 liegt an der entsprechenden Schulter das Kugellager 69 an, an das die Schulter 73 der Nabe 68 anstößt. Der Kraftfluß schließt sich von der Nabe 68 über die Kupplungsscheibe 65 zu der Kupplungsscheibe 64 und von dort über deren Nabe 66 zu der Druckfeder 74. Somit wird mit Hilfe der Druckfeder 84 die Kraft erzeugt, mit der die beiden Kupplungsscheiben 64 und 65 reibschlüssig in Eingriff stehen, wenn keine zusätzliche Druckkraft auf die beiden Kupplungsscheiben 64 und 65 einwirkt.

Eine solche zusätzliche Kraft erzeugt bei dem neuen Kettenzug die Druckfeder 84 der Bremseinrichtung 78. Wie die Figur erkennen läßt, sitzen die beiden Kupplungsscheiben 64 und 65 zwischen den beiden ringförmigen Bremsscheiben 83 und 85. Diese beiden Bremsplatten 83 und 85 werden mit Hilfe der Druckfeder 84 aufeinander zu vorgespannt. Der Kraftfluß dieser Druckfeder 84 wird am rechten Ende der Bohrung 82 über eine gezeigte, jedoch nicht mit einem Bezugszeichen versehene Ringschulter in das Magnetjoch 79 eingeleitet. Die Kraft der Druckfeder 84 geht durch die Schrauben 86 und über deren Kopf zu der linken Bremsplatte 85. Die Bremsplatte 85 liegt ringförmig an dem Bremsbelag 76 der Kupplungsscheibe 65 an.

Die von der Feder 84 hervorgerufene Druckkraft geht über die Kupplungsscheibe 65 zu der Kupplungsscheibe 64 und von dort zu der Bremsplatte 83, die sich im Bereiche ihrer Bohrung an der Druckfeder 84 abstützt.

Die beiden Kupplungsscheiben 64 und 65 werden von den Bremsplatten 83 und 84 zangenförmig übergriffen und von der Außenseite her zusätzlich mit einer Kraft entsprechend der Vorspannkraft der Druckfeder 84 zusammengedrückt. Bei nicht erregtem Magneten 78 wirken auf die beiden Kupplungsscheiben 64 und 65 zwei Federn ein, nämlich die Druckfeder 74 und die Druckfeder 84. Wird hingegen der Elektromagnet 78 eingeschaltet, wird die Wirkung der Druckfeder 84 von den beiden Kupplungsscheiben 64 und 65 weggenommen. Diese werden dann nur noch entsprechend der Vorspannkraft der Druckfeder 74 in Reibeingriff miteinander vorgespannt.

Wenn bei dieser Anordnung zunächst der Strom für den Motor 9 eingeschaltet wird und erst verzögert der Elektromagnet 78 der kombinierten Kupplungs- und Bremseinrichtung 16, dann ist bei entsprechender Dimensionierung der beiden Druckfedern 74 und 84 die Vorspannkraft zwischen den beiden Kupplungscheiben 64 und 66 und der Reibschluß zwischen der mit dem Anker 13 formschlüssig gekuppelten Kupplungsscheibe 64 und der benachbarten Bremsplatte 85 so groß, daß der Anker 13 blockiert bleibt. Erst, wenn kurze Zeit später der Elektromagnet 78 eingeschaltet wird, und die Bremsplatte 83 an das Magnetjoch 79 herangezogen wird, fällt die Bremskraft weg und der Motor 9 vermag die Steckwelle 58 in Umdrehungen zu versehen. Wenn die an die nicht gezeigten Kette hängende Last geringer als die zulässige Grenzlast ist, wird sich über das Planetengetriebe 15 auch die Kettennuß 14 in Bewegung setzen. Ist hingegen die angehängte Hakenlast zu groß, rutscht die aus den beiden Kupplungsscheiben 64 und 65 gebildete Rutschkupplung durch, wobei das Rutschmoment jetzt ausschließlich durch die Vorspannung der Druckfeder 74 festgelegt ist.

Wesentlich dabei ist, daß in jedem Falle aufgrund der getroffenen Anordnung bis zum Lüften der Bremse, also dem Einschalten des Elektromagneten 78, die Rutschkupplung sich im Zustand der Haftreibung befunden hat. Auch wenn der Elektromagnet 78 erst eingeschaltet wird, nachdem der Motor 9 eingeschaltet ist, kommt die Rutschkupplung keineswegs vorher in den Zustand der Gleitreibung. Unabhängig von den zeitlichen Relationen werden damit exakt reproduzierbare Verhältnisse des Reibeingriffs zwischen den beiden Kupplungsscheiben 64 und 65 hergestellt, die insbesondere unabhängig davon sind, mit welcher Verzögerung der Magnet 78 gegenüber dem Motor 9 eingeschaltet wird und ob beide gleichzeitig aktiviert werden.

Andererseits hat die neue Lösung den wesentlichen Vorteil, daß das Bremsmoment, mit dem die Kettennuß 14 abgebremst werden kann, nicht von dem Rutschmoment der Sicherheitskupplung abhängig ist.

Würde an dem Haken eine zu große Last hängen, die ein größeres Drehmoment zwischen den beiden Kupplungsscheiben 64 und 65 erzeugen würde, als es dem Überwinden der Haftreibung zwischen diesen beiden Kupplungsscheiben 64 und 65 bei gelüfteter Bremse entsprechen würde, wäre die Last jederzeit wieder zum Halten zu bringen. Es genügt, wenn die Bedienperson den Kettenzug 1 abschaltet, weil sodann umgehend der Elektromagnet 78 entregt wird, was dazu führt, daß die Druckfeder 84 wiederum wirksam wird und die beiden Kupplungsscheiben 64 und 65 festbremst, unabhängig von dem über die Druckfeder 74 eingestellten Rutschmoment.

Eine zusätzliche Sicherheit wird bei der gezeigten Lösung dadurch erhalten, daß sowohl die eingangsseitige als auch die ausgangsseitige Kupplungsscheibe 64, 65 jeweils mit einem eigenen Bremsbelag 76 versehen ist, so daß selbst dann ein sicheres Bremsen gewährleistet ist, wenn die Rutschkupplung selbst ihren Dienst versagen würde. Da beide Kupplungsscheiben 64 und 65 mit einem eigenen Reibbremsbelag 76 versehen sind, wird durch die zugeordneten Bremsplatten 83 und 85 jede Kupplungsscheibe 64, 65 für sich abgebremst, d.h. es wird sowohl die Motorseite als auch, was noch wichtiger ist, die Abtriebsseite und damit die Kettennußseite festgebremst.

Würde hingegen der ausgangsseitige Bremsbelag 76 der Kupplungsscheibe 75 versagen, während die Kupplung selbst in Ordnung ist, würde dennoch ein zuverlässiges Bremsen stattfinden, denn dann geschieht die Bremswirkung über die Kupplungsscheibe 64 und die Haftreibung zwischen den Kupplungscheiben 64 und 65, deren Reibkraft bei nicht erregter Bremse signifikant vergrößert ist.

Die schwimmende Lagerung der Bremseinheit 78 soll gewährleisten, daß beide Bremsplatten 83 und 85 in gleicher Weise zuspannen können und keine Biegekräfte an den beiden Kupplungsscheiben 64 und 65 auftreten.

Anstatt die Bremseinheit 78 schwimmend zu lagern, ist es auch möglich, die beiden Kupplungsscheiben 64 und 65 auf der Steckwelle 58 schwimmend anzuordnen, wenn durch andere Maßnahmen die Vorspannung zwischen den beiden Kupplungsscheiben 64 und 65 hergestellt wird. Die gezeigte Anordnung hat den Vorteil, daß das Rutsch- oder Reibmoment mit Hilfe der von außen zugänglichen Mutter 75 leicht einstellbar ist.

## Patentansprüche

1. Hebezeug (1)
mit einem Antriebsmotor (9),
mit einem mit dem Antriebsmotor (9) gekuppelten Getriebe (15), das zumindest eine Eingangs- (57) und eine Ausgangswelle (38), die mit einer Lastmittelhubeinrichtung (14) verbunden ist, aufweist und das mit dem Antriebsmotor (9) und der Lastmittelhubeinrichtung (14) einen Antriebsstrang bildet,
mit einer auf dem Antriebsstrang wirkenden Bremseinrichtung (77), die wenigstens ein drehfestes Bremsglied (83,85) sowie wenigstens ein mit dem Antriebsstrang umlaufendes Bremsglied (64,65) aufweist, die durch eine wahlweise lüftbare Bremsvorspanneinrichtung (77,82) wahlweise in Reibeingriff miteinander vorspannbar sind,
mit einer den Antriebsstrang in zwei Abschnitte aufteilenden Rutschkupplung (64,65), die wenigstens ein angetriebenes Kupplungsglied (64) sowie wenigstens ein treibendes Kupplungsglied (65) aufweist, die beide durch eine Kupplungsvorspanneinrichtung (74) in Reibeingriff miteinander vorgespannt sind,
wobei die Bremsvorspanneinrichtung (78,82) derart angeordnet ist, daß sie im nicht gelüfteten Zustand eine zusätzliche Kraft auf die Kupplungsglieder (64,65) im Sinne einer Erhöhung der auf die Kupplungsglieder (64,65) wirkenden Vorspannkraft zur Einwirkung bringt.

2. Hebezeug nach Anspruch 1, **dadurch gekennzeichnet, daß** das wenigstens eine drehbare Bremsglied (64) drehfest mit dem wenigsten einen angetriebenen Kupplungsglied (64) gekuppelt ist.

3. Hebezeug nach Anspruch 1, **dadurch gekennzeichnet, daß** wenigstens eine drehbare Bremsglied (64) und das wenigstens eine angetriebene Kupplungsglied (64) miteinander einstückig sind.

4. Hebezeug nach Anspruch 1, **dadurch gekennzeichnet, daß** die Bremseinrichtung (77) wenigstens zwei drehfeste Bremsglieder (83,85) aufweist.

5. Hebezeug nach Anspruch 1, **dadurch gekennzeichnet, daß** die Kupplungseinrichtung (64,65) zwischen den beiden drehfesten Bremsgliedern (83,85) angeordnet ist.

6. Hebezeug nach Anspruch 1, **dadurch gekennzeichnet, daß** das drehfeste Bremsglied oder die drehfesten Bremsglieder (83,85) plane Bremsflächen tragen.

7. Hebezeug nach Anspruch 1, **dadurch gekennzeichnet, daß** das drehfeste Bremsglied oder die drehfesten Bremsglieder (83,85) konische Bremsflächen tragen.

8. Hebezeug nach Anspruch 1, **dadurch gekennzeichnet, daß** die weingstens zwei Kupplungsglieder (64,65) scheibenförmig sind.

9. Hebezeug nach Anspruch 1, **dadurch gekennzeichnet, daß** die Kupplungseinrichtung zwei Kupplungsglieder (64, 65) aufweist, die scheibenförmig sind und auf ihren einander zugekehrten Flächen Kupplungsflächen tragen, und daß die nach außen weisenden Flächen der Kupplungsglieder (64,65) mit Bremsflächen (76) versehen sind.

10. Hebezeug nach Anspruch 1, **dadurch gekennzeichnet, daß** das wenigstens eine ortsfeste Bremsglied (83,85) und das wenigstens eine drehbare Bremsglied (64,65) durch Federmittel (84) in Reibeingriff aufeinander zu vorgespannt sind.

11. Hebezeug nach Anspruch 1, **dadurch gekennzeichnet, daß** der Bremseinrichtung (77) eine Bremslüfteeinrichtung (78) zugeordnet ist, die entgegen den Federmitteln (82) wirkt.

12. Hebezeug nach Anspruch 1, **dadurch gekennzeichnet, daß** der Antriebsmotor (9) über die Kupplungseinrichtung (64, 65) auf eine Eingangswelle (57) des Getriebes (15) wirkt.

13. Hebezeug nach Anspruch 1, **dadurch gekennzeichnet, daß** die Kupplungseinrichtung (64,65) bezüglich Wellen (58,57), die die Kupplungseinrichtung (64,65) antreiben bzw. die von der Kupplungseinrichtung (64,65) angetrieben sind, axial schwimmend gelagert ist.

14. Hebezeug nach Anspruch 1, **dadurch gekennzeichnet, daß** die drehfest angeordneten Bremsglieder (83,85) in Richtung parallel zu einer Drehachse der Kupplungseinrichtung (64, 65) schwimmend gelagert sind.

15. Hebezeug nach Anspruch 1, **dadurch gekennzeichnet, daß** die drehfest angeordneten Bremsglieder (83,85) in Richtung parallel zu einer Drehachse der Kupplungseinrichtung (64, 65) derart geführt sind, daß sie im gelüfteten Zustand der Bremseinrichtung (77) verkippen können.

16. Hebezeug nach Anspruch 1, **dadurch gekennzeichnet, daß** die Kupplungsglieder (64,65) durch Federmittel (74) in Reibeingriff miteinander vorgespannt sind.

17. Hebezeug nach Anspruch 1, **dadurch gekennzeichnet, daß** die Lüfteeinrichtung (78) einen Elektromagneten aufweist.

## Claims

1. Hoist (1)
with a drive motor (9),
with a gear (15) coupled to the drive motor (9), said gear having at least one input (57) and one output shaft (38), which is connected to a load hoisting means (14), and said gear forming a drive series with the drive motor (9) and the load hoisting means (14),
with a braking means (77) acting on the drive series and having at least one rotationally fixed brake member (83, 85) as well as at least one brake member (64, 65) rotating with the drive series, which can be prestressed selectively in frictional engagement with one another by a brake prestressing device (77, 82) which may be selectively disengaged,
with a friction clutch (64, 65) dividing the drive series into two sections and having at least one driven clutch member (64) as well as at least one driving clutch member (65), which are both prestressed in frictional engagement with one another by a clutch prestressing device (74), wherein the brake prestressing device (78, 82) is arranged in such a way that, in the engaged state, it causes an additional force to act on the clutch members (64, 65) in the manner of an increase in prestressing force acting on the clutch members (64, 65).

2. Hoist according to Claim 1, **characterised in that** the at least one rotatable brake member (64) is coupled with the at least one driven clutch member (64) in a rotationally fixed manner.

3. Hoist according to Claim 1, **characterised in that** the at least one rotatable brake member (64) and the at least one driven clutch member (64) are in one piece.

4. Hoist according to Claim 1, **characterised in that** the braking means (77) has at least two rotationally fixed brake members (83, 85).

5. Hoist according to Claim 1, **characterised in that** the clutch means (64, 65) is disposed between the two rotationally fixed brake members (83, 85).

6. Hoist according to Claim 1, **characterised in that** the rotationally fixed brake member or rotationally fixed brake members (83, 85) bear plane braking surfaces.

7. Hoist according to Claim 1, **characterised in that** the rotationally fixed brake member or rotationally fixed brake members (83, 85) bear conical braking surfaces.

8. Hoist according to Claim 1, **characterised in that** the at least two clutch members (64, 65) are disc-shaped.

9. Hoist according to Claim 1, **characterised in that** the clutch means has two clutch members (64, 65) which are disc-shaped and bear clutch faces on their surfaces facing one another, and that the outwardly pointing surfaces of the clutch members (64, 65) are provided with braking surfaces (76).

10. Hoist according to Claim 1, **characterised in that** the at least one fixed brake member (83, 85) and the at least one rotatable brake member (64, 65) are to be prestressed towards one another in frictional engagement by spring means (84).

11. Hoist according to Claim 1, **characterised in that** a brake venting means (78) acting against the spring means (82) is allocated to the braking means (77).

12. Hoist according to Claim 1, **characterised in that** the drive motor (9) acts on an input shaft (57) of the gear (15) via the clutch means (64, 65).

13. Hoist according to Claim 1, **characterised in that** the clutch means (64, 65) is disposed in an axially floating manner with respect to shafts (58, 57), which drive the clutch means (64, 65) or which are driven by the clutch means (64, 65).

14. Hoist according to Claim 1, **characterised in that** the brake members (83, 85) arranged to be rotationally fixed are disposed in a floating manner in a direction parallel to a rotational axis of the clutch means (64, 65).

15. Hoist according to Claim 1, **characterised in that** the brake members (83, 85) arranged to be rotationally fixed are disposed in a direction parallel to a rotational axis of the clutch means (64, 65) in such a manner that they can tilt in the vented state of the braking means (77).

16. Hoist according to Claim 1, **characterised in that** the clutch members (64, 65) are prestressed in frictional engagement with one another by spring means (74).

17. Hoist according to Claim 1, **characterised in that** the venting means (78) has an electromagnet.

## Revendications

1. Palan (1)
avec un moteur d'entraînement (9),
avec un engrenage (15) qui est couplé au moteur d'entraînement (9), comporte au moins un arbre d'entrée (57) et un arbre de sortie (38) relié à un moyen de levage de charge (14) et forme avec le moteur d'entraînement (9) et le moyen de levage de charge (14) une chaîne d'entraînement,
avec un dispositif de freinage (77) qui agit sur la chaîne d'entraînement et comporte au moins un élément de frein (84, 85) fixe en rotation et au moins un élément de frein (64, 65) tournant avec la chaîne d'entraînement, qui peuvent être serrés l'un contre l'autre, en prise de frottement, à l'aide d'un dispositif de serrage de frein (77, 82) desserrable de manière sélective,
avec un accouplement à friction (64, 65) qui divise en deux la chaîne d'entraînement, comporte au moins un élément d'accouplement mené (64) et au moins un élément d'accouplement menant (65), qui sont précontraints en prise de friction réciproque à l'aide d'un dispositif de serrage d'accouplement (74),
dans lequel le dispositif de serrage de frein (77, 82) est disposé de manière telle, qu'à l'état non débloqué, il exerce une force supplémentaire sur les éléments d'accouplement (64, 65), dans le sens d'une augmentation de la force de précontrainte agissant sur lesdits éléments d'accouplement (64, 65).

2. Palan selon la revendication 1, **caractérisé en ce qu'**au moins un élément de frein (64) tournant est solidaire en rotation de l'élément d'accouplement mené (64), au nombre d'au moins un.

3. Palan selon la revendication 1, **caractérisé en ce que** l'élément de frein (64) tournant, au nombre d'au moins un, et l'élément d'accouplement mené (64), au nombre d'au moins un, forment un ensemble monobloc.

4. Palan selon la revendication 1, **caractérisé en ce que** le dispositif de freinage (77) comporte au moins deux éléments de frein (83, 85) fixes en rotation.

5. Palan selon la revendication 1, **caractérisé en ce que** le dispositif d'accouplement (64, 65) est disposé entre les deux éléments de frein (83, 85) fixes en rotation.

6. Palan selon la revendication 1, **caractérisé en ce que** l'élément de frein fixe en rotation ou les éléments de frein (83, 85) fixes en rotation comportent des surfaces de freinage planes.

7. Palan selon la revendication 1, **caractérisé en ce que** l'élément de frein fixe en rotation ou les éléments de frein (83, 85) fixes en rotation comportent des surfaces de freinage coniques.

8. Palan selon la revendication 1, **caractérisé en ce que** les éléments d'accouplement (64, 65), au nombre d'au moins deux, ont une forme de disques.

9. Palan selon la revendication 1, **caractérisé en ce que** le dispositif d'accouplement comprend deux éléments d'accouplement (64, 65) en forme de disques, qui sont en contact par leurs faces mutuellement en vis-à-vis, et **en ce que** les surfaces tournées vers l'extérieur des éléments d'accouplement (64, 65) sont munies de surfaces de frein (76).

10. Palan selon la revendication 1, **caractérisé en ce que** l'élément de frein (83, 85) stationnaire, au nombre d'au moins un, et l'élément de frein (64, 65) tournant, au nombre d'au moins un, sont précontraints l'un contre l'autre, en prise de friction, par des ressorts (84).

11. Palan selon la revendication 1, **caractérisé en ce qu'**un dispositif de desserrage (78) de frein, qui agit à l'encontre des ressorts (82) est associé au dispositif de freinage (77).

12. Palan selon la revendication 1, **caractérisé en ce que** le moteur d'entraînement (9) agit sur un arbre d'entrée (57) de l'engrenage (15) par l'intermédiaire du dispositif d'accouplement (64, 65).

13. Palan selon la revendication 1, **caractérisé en ce que** le dispositif d'accouplement (64, 65) est monté flottant dans la direction axiale par rapport aux arbres (57, 58) qui entraînent le dispositif d'accouplement (64, 65) ou sont entraînés par le dispositif d'accouplement (64, 65).

14. Palan selon la revendication 1, **caractérisé en ce que** les éléments de freins (83 ,85) fixes en rotation sont montés flottants dans la direction parallèle à un axe de rotation du dispositif d'accouplement (64, 65).

15. Palan selon la revendication 1, **caractérisé en ce que** les éléments de freins (83 ,85) fixes en rotation, dans la direction parallèle à un axe de rotation du dispositif d'accouplement (64, 65), sont guidés de manière telle qu'ils puissent basculer lorsque le dispositif de freinage (77) est desserré.

16. Palan selon la revendication 1, **caractérisé en ce que** les éléments d'accouplement (64, 65) sont précontraints l'un contre, en prise de friction, par des ressorts (74).

17. Palan selon la revendication 1, **caractérisé en ce que** le dispositif de desserrage (78) comprend un électro-aimant.
